# EUROPÄISCHE PATENTSCHRIFT

(11) **EP 2 830 925 B1**
(45) Veröffentlichungstag und Bekanntmachung des Hinweises auf die Patenterteilung: **16.10.2019**
(21) Anmeldenummer: 13709890.1
(22) Anmeldetag: 13.03.2013
(51) Int. Cl.: B61D 17/12, B61D 39/00

(54) **SCHIENENFAHRZEUG MIT SOLARZELLE**
RAIL VEHICLE HAVING A SOLAR CELL
VÉHICULE FERROVIAIRE MUNI D'UNE CELLULE SOLAIRE

(30) Priorität: 26.03.2012 AT 500992012
(43) Veröffentlichungstag der Anmeldung: 04.02.2015
(73) Patentinhaber: Siemens Mobility GmbH, 1210 Wien (AT)
(72) Erfinder: KIRALY, Andras, A-1220 Wien (AT)
(74) Vertreter: Deffner, Rolf
(86) Internationale Anmeldenummer: PCT/EP2013/055131
(87) Internationale Veröffentlichungsnummer: WO 2013/143849

(56) Entgegenhaltungen:
- DE-A1- 3 037 378
- DE-A1- 19 820 110
- DE-A1-102009 015 164
- DE-U1-202011 105 321
- US-A1- 2010 200 041

## Beschreibung

### Technisches Gebiet

Die Erfindung betrifft ein Schienenfahrzeug mit Solarzelle. Ein solches Schienenfahrzeug ist z.B. von der DE 198 20 110 A1 bekannt.

### Stand der Technik

Die Energieversorgung von Schienenfahrzeugen, insbesondere Passagierschienenfahrzeugen erfolgt gebräuchlicherweise aus dem Antriebsfahrzeug. Dieses Antriebsfahrzeug (Lokomotive bzw. Triebwagen) leitet elektrische Energie an die angekuppelten Wagen weiter. Bei Diesellokomotiven ist es dabei erforderlich, dass der Hauptantrieb bzw. ein Hilfsgenerator in Betrieb ist. Andere Energieversorgungen, wie Achsgeneratoren wirken nur während der Fahrt, während wieder andere (Akkumulatoren) nur beschränkte und erschöpfbare Energiekapazitäten aufweisen. Für Verbraucher mit geringer Leistungsaufnahme, wie Fahrzeugelektronik, Batterieladegeräte oder ähnliche bietet sich der Einsatz von Solarzellen an, mittels welcher diese Geräte unabhängig von einer zentralen Energieversorgung betrieben werden können, insbesondere auch bei stehenden, abgekuppeltem Fahrzeug. Außerdem bedienen sich Solarzellen einer natürlichen und nicht erschöpfbaren, nachhaltigen Energiequelle. Der Einsatz von Solarzellen an Schienenfahrzeugen ist in WO2007090966A beschrieben, wobei flexible Solarzellen zum Einsatz kommen, die sich der Dachkontur anpassen. Diese Konstruktion ist für Schienenfahrzeuge für den Einsatz bei erschwerten Umweltbedingungen nicht vorteilhaft. In extrem heißen Gebieten, bzw. Gebieten mit häufig auftretenden abrasiven Belastungen der Außenhaut (Sandstürme) sind Solarzellenanordnungen gemäß dem Stand der Technik nicht einsetzbar, da diese abrasive Belastung zu einer Trübung der Solarzellenoberfläche führt, wodurch deren Leistung beeinträchtigt wird. Weiters erweist sich der auf den Solarzellen verbleibende Sand als äußerst nachteilig, wenn ein solches besandetes Fahrzeug einer maschinellen Wäsche unterzogen wird. Die Solarzellenoberfläche wird durch die Einwirkung der Sand-Wasser-Waschbürstenkombination beschädigt.

### Darstellung der Erfindung

Der Erfindung liegt daher die Aufgabe zugrunde, ein Schienenfahrzeug mit Solarzellen anzugeben, welches für den Einsatz bei abrasiven Umgebungsbedingungen geeignet ist.

Die Aufgabe wird durch ein Schienenfahrzeug mit Solarzellen mit den Merkmalen des Anspruchs 1 gelöst. Vorteilhafte Ausgestaltungen sind Gegenstand untergeordneter Ansprüche.

Dem Grundgedanken der Erfindung nach wird ein Schienenfahrzeug mit Solarzelle aufgebaut, welches mindestens eine Solarzelle umfasst, die an der Außenhaut des Schienenfahrzeugs vorgesehen ist, wobei die mindestens eine Solarzelle beweglich gelagert ist und zwischen einer Betriebsposition und einer inaktiven Position bewegbar ist, wobei in der inaktiven Position die lichtaufnehmende Oberfläche der mindestens einen Solarzelle verdeckt ist.

Dadurch ist der Vorteil erzielbar, ein Schienenfahrzeug mit Solarzellen ausstatten zu können, welche in bestimmten Betriebszuständen des Schienenfahrzeugs in eine inaktive Position gebracht werden können, in welcher sie von Umwelteinflüssen geschützt sind. Insbesondere bei stark abrasiven Umweltbedingungen (z.B. Sandstürme) oder Waschvorgängen im Anschluß an die Besandung können die Solarzellen dabei in eine geschützte Position gebracht werden.

Erfindungsgemäß umfasst das Schienenfahrzeug mindestens eine Solarzelle, wobei im Allgemeinen mehrere Solarzellen eingesetzt werden. Diese Solarzellen werden vorteilhafterweise in einen Trägerrahmen eingebaut, der die Solarzelle(n) mechanisch stützt, die Kanten bzw. Rückseiten der Solarzellen umschließt und als wesentliches Merkmal eine Dreh- bzw. Schiebelagerung umfasst.

Die Solarzelle ist mittels einer Schiebebewegung zwischen der Betriebs- und der inaktiven Position bewegbar. Dabei sind der Trägerrahmen sowie die Außenhaut des Schienenfahrzeugs mit geeigneten Lagereinrichtungen wie Führungsschienen, Rollenlagerungen etc. auszustatten. Weiters kann dabei eine Abdeckhaube vorgesehen werden, unter welche die Solarzelle in inaktiver Position geschoben wird. Eine weitere Möglichkeit die Solarzelle in inaktiver Position abzudecken besteht darin, sie in eine geeignete Ausnehmung der Außenhaut einzuschieben.

Die Solarzellen werden vorzugsweise am Dach des Schienenfahrzeugs angeordnet, da solcherart eine besonders gute Beaufschlagung mit Sonnenlicht erzielt. Prinzipiell ist eine Seitenwand eines Schienenfahrzeugs auch für die Anordnung von Solarzellen geeignet, aber diese Anordnung weist Nachtteile auf, beispielsweise erfolgt die Sonneneinstrahlung dabei meist unter ungünstigeren Winkeln bzw. ist bei nebeneinander geparkten Fahrzeugen eine Beschattung zu erwarten. Ebenfalls sind die Fensteröffnungen von Passagierfahrzeugen störend für eine optimale Anordnung von Solarzellen.

In weiterer Fortbildung der Erfindung kann eine Dichtung vorgesehen werden, die den Zutritt von abrasiven Material zu der lichtaufnehmenden Oberfläche der Solarzelle in inaktiver Position verhindert, bzw. stark vermindert. Eine solche Dichtung kann beispielsweise als Gummilippe ausgeführt werden, welche entweder am Trägerrahmen entlang der Umrisse der Solarzelle angeordnet ist oder Teil jeder Fläche sein, auf welcher die Solarzelle (bzw. der Trägerrahmen) in inaktiver Position aufliegt.

Neben den erwähnten Gummidichtungen können auch Bürstendichtungen eingesetzt werden.
Ein weiterer Vorteil dieser Dichtungen liegt in der Verhinderung von Geräuschen bei Fahrten mit den Solarzellen in inaktiver Position.

Der Antrieb der beweglichen Lagerung der Solarzellen erfolgt im Allgemeinen manuell. Dies ist insbesondere Vorteilhaft, da dadurch jegliche kraftunterstützte Antriebskomponenten entfallen können. Die Betätigung der beweglichen Lagerung erfolgt in der Praxis nur selten, insbesondere vor dem Eintreffen von Sandstürmen, vor einem Waschvorgang oder bei längerem Stillstand des Fahrzeugs wenn keine elektrische Energie aus den Solarzellen gewonnen werden soll.

Ein weitere vorteilhafte Ausführungsform der Erfindung sieht vor, die Solarzelle in Betriebsposition beabstandet von der Außenhaut des Schienenfahrzeugs anzuordnen. Dadurch ist der Vorteil erzielbar, die Wärmeeinbringung in das Schienenfahrzeug bei starker Sonneneinstrahlung wesentlich reduzieren zu können. Der Abstand zwischen der Solarzelle und der (Dach)außenhaut wirkt als thermischer Isolator gegen die Strahlungswärme, das Schienenfahrzeug ist dadurch auch in direkter Sonneneinstrahlung durch die Solarzellen beschattet, wodurch eine wesentlich niedrigere Oberflächentemperatur der (Dach-)Außenhaut erzielt wird. Dadurch ist es möglich, die erforderliche Kühlleistung des Schienenfahrzeugs zu reduzieren.

### Kurzbeschreibung der Zeichnungen

Es zeigen beispielhaft:
**Fig.1** Ein Schienenfahrzeug mit Solarzelle - ausgeklappt, das nicht Teil der Erfindung ist.
**Fig.2** Ein Schienenfahrzeug mit Solarzelle - eingeklappt, das nicht Teil der Erfindung ist.
**Fig. 3** Ein erfindungsgemäßes Schienenfahrzeug mit Solarzelle - Schiebelagerung.
**Fig.4** Klappbar gelagerte Solarzelle - ausgeklappt, die nicht Teil der Erfindung ist.
**Fig.5** Klappbar gelagerte Solarzelle - eingeklappt, die nicht Teil der Erfindung ist.

### Ausführung der Erfindung

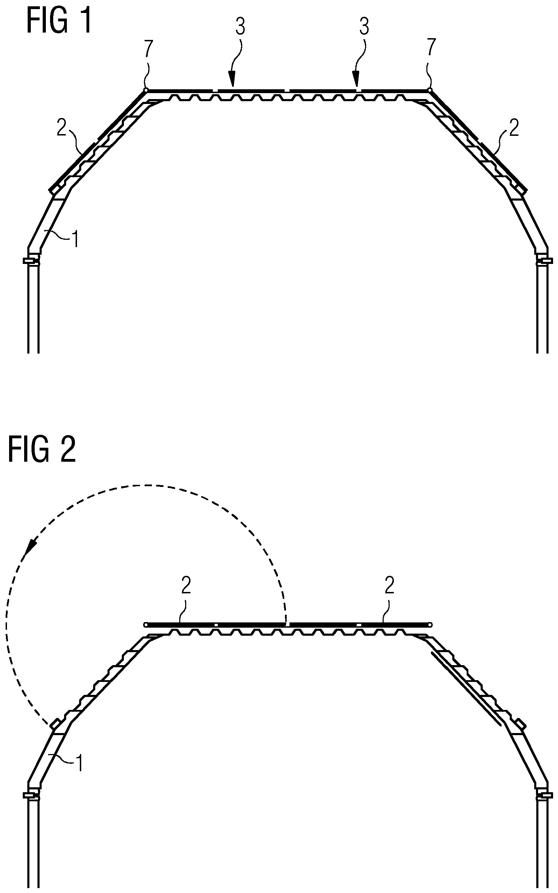

**Fig.1** zeigt beispielhaft und schematisch ein Schienenfahrzeug mit Solarzelle in ausgeklappter Position (Betriebsposition). Es ist ein Schnitt quer zur Längsrichtung durch die Dachstruktur eines Schienenfahrzeugs 1 dargestellt. An der Außenhaut des Schienenfahrzeugs 1 sind zwei Solarzellen 2 beweglich angeordnet. Die Solarzellen 2 sind um jeweils ein Drehgelenk 7 drehbar. Eine Platte 3 ist im oberen, im Wesentlichen waagrechten Dachbereich angeordnet. Die Solarzellen 2 befinden sich in Betriebsposition, ihre lichtaufnehmenden Oberflächen sind von der Außenhaut des Schienenfahrzeugs 1 abgewandt. Die Platten 3 und die Solarzellen 3 sind in einem bestimmten Abstand von der Außenhaut des Schienenfahrzeugs 1 angeordnet. Weitere Bauteile, insbesondere Befestigungsbauteile sowie ein Trägerrahmen sind in der Prinzipskizze Fig.1 zur Vereinfachung nicht dargestellt.

**Fig.2** zeigt beispielhaft und schematisch ein Schienenfahrzeug mit Solarzelle in eingeklappter Position (inaktive Position). Es ist das Schienenfahrzeug 1 aus Fig1. dargestellt, wobei sich die Solarzellen 2 in inaktiver Position befinden. Die Solarzellen 2 sind umgeklappt und liegen an den Platten 3 an. Weitere Details, wie ggf. vorgesehene Dichtungen sind zur Vereinfachung nicht dargestellt.

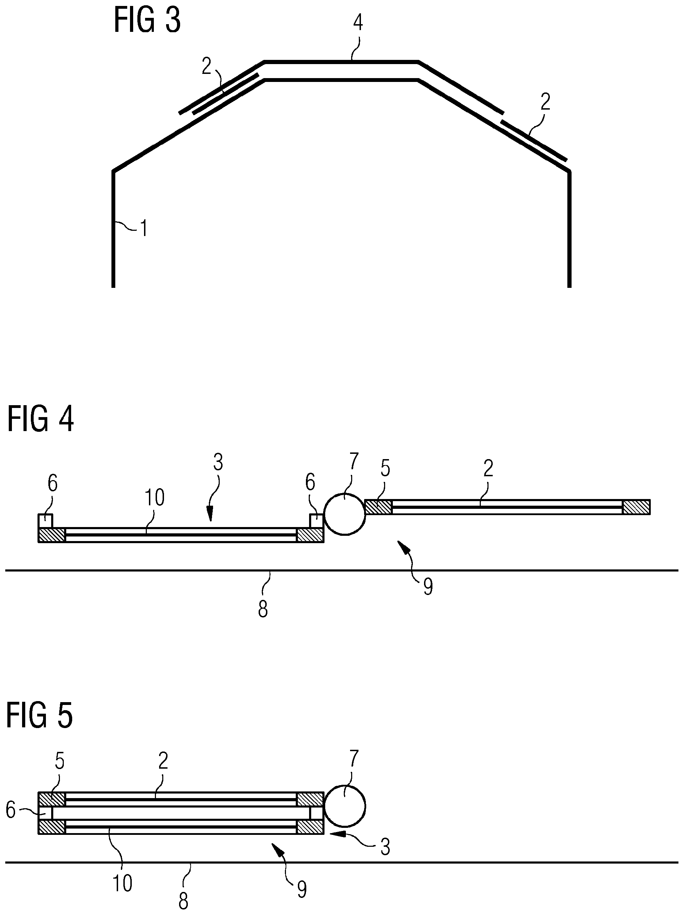

**Fig.3** zeigt beispielhaft und schematisch ein Schienenfahrzeug mit Solarzelle mit Schiebelagerung. Es ist eine weitere Ausführungsform der Erfindung dargestellt, bei welcher die Solarzellen 2 in eine Ausnehmung im Dachbereich des Schienenfahrzeugs 1 schiebbar gelagert sind. In diesem Ausführungsbeispiel wird die Ausnehmung durch die Dachaußenhaut und eine von der Dachaußenhaut beabstandete Abdeckhaube 4 gebildet. Die Solarzellen 2 sind zur Verdeutlichung der Funktion jeweils einseitig in Betriebssowie inaktiver Position dargestellt. Ein solcher Betriebszustand ist im realen Betrieb eines Schienenfahrzeugs 1 nicht gebräuchlich, jedoch möglich. Weiter Bauteile, z.B. entsprechende Schiebeführungen sind zur Vereinfachung der Darstellung nicht gezeigt. Die Solarzellen sind, wie in der Ausführungsform gemäß Fig.1 und 2 von der Dachaußenhaut beabstandet, sodaß auch in dieser Ausführungsform ein Beschattungseffekt der Dachaußenhaut entsteht.

**Fig.4** zeigt beispielhaft und schematisch eine klappbar gelagerte Solarzelle in ausgeklappter Position (Betriebsposition). Es ist eine drehbar gelagerte Solarzelle 2 dargestellt, welche an der Außenhaut 8 eines Schienenfahrzeugs angeordnet ist. Die Solarzelle 2 ist von einem Trägerrahmen 5 eingefasst. Der Trägerrahmen 5 ist mittels einer Drehlagerung 7 mit einer Platte 3 drehbar verbunden. Die Platte 3 ist ähnlich wie der drehbeweglich gelagerte Teil (Trägerahmen 5 und Solarzelle 2) der gesamten Solarzelleneinrichtung mit einer feststehenden Solarzelle 10 ausgestattet. Weiters ist die Platte 3 mit einer umlaufenden Dichtung 6 ausgestattet, welche die lichtempfangende Oberfläche der Solarzelle 2 sowie der feststehenden Solarzelle 10 in inaktiver Position vor Beschädigung schützt. Weitere Bauteile, insbesondere Befestigungsbauteile für die Befestigung der Platten-Solarzelleneinheit an der Dachaußenhaut sind in Fig.4 zur Vereinfachung nicht dargestellt.

**Fig.5** zeigt beispielhaft und schematisch eine klappbar gelagerte Solarzelle in eingeklappter Position(inaktive Position). Es ist die Ausführungsform nach Fig.4 in geschlossener, eingeklappter Position (inaktive Position) dargestellt.

### Liste der Bezeichnungen

- 1: Schienenfahrzeug
- 2: Solarzelle
- 3: Platte
- 4: Abdeckhaube
- 5: Trägerrahmen
- 6: Dichtung
- 7: Drehlagerung
- 8: Außenhaut
- 9: Abstand
- 10: Solarzelle feststehend

## Patentansprüche

1. Schienenfahrzeug (1) mit Solarzelle (2), wobei mindestens eine Solarzelle (2) an der Außenhaut (8) des Schienenfahrzeug (1) vorgesehen ist, **dadurch gekennzeichenet, dass** die mindestens eine Solarzelle (2) schiebebeweglich gelagert ist und zwischen einer Betriebsposition und einer inaktiven Position bewegbar ist, wobei in der inaktiven Position die lichtaufnehmende Oberfläche der mindestens einen Solarzelle (2) verdeckt ist.

2. Schienenfahrzeug (1) mit Solarzelle (2) nach Anspruch 1, **dadurch gekennzeichnet, dass** die Schieberichtung der mindestens einen Solarzelle (2) quer zur Längsrichtung des Schienenfahrzeugs (1) ausgerichtet ist.

3. Schienenfahrzeug (1) mit Solarzelle (2) nach Anspruch 2, **dadurch gekennzeichnet, dass** die mindestens eine Solarzelle (2) in der inaktiven Position von einer Abdeckhaube (4) verdeckt ist.

4. Schienenfahrzeug (1) mit Solarzelle (2) nach einem der Ansprüche 1 bis 3, **dadurch gekennzeichnet, dass** die mindestens eine Solarzelle (2) in einen Trägerrahmen (5) eingebaut ist, welcher eine Dreh- bzw. Schiebelagerung umfasst.

5. Schienenfahrzeug (1) mit Solarzelle (2) nach einem der Ansprüche 1 bis 4, **dadurch gekennzeichnet, dass** die mindestens eine Solarzelle (2) in Betriebsposition von der Außenhaut (8) des Schienenfahrzeugs (1) beabstandet ist (9).

## Claims

1. Rail vehicle (1) having a solar cell (2), wherein at least one solar cell (2) is provided on the outer skin (8) of the rail vehicle (1), **characterised in that** the at least one solar cell (2) is movably supported and is able to be moved between an operating position and an inactive position, wherein in the inactive position the light-receiving surface of the at least one solar cell (2) is covered.

2. Rail vehicle (1) having a solar cell (2) according to claim 1, **characterised in that** the slide direction of the at least one solar cell (2) is aligned transversely to the longitudinal direction of the rail vehicle (1).

3. Rail vehicle (1) having a solar cell (2) according to claim 2, **characterised in that** the at least one solar cell (2) is covered by a cover hood (4) in its inactive position.

4. Rail vehicle (1) having a solar cell (2) according to one of claims 1 to 3, **characterised in that** the at least one solar cell (2) is built into a carrier frame (5) which includes a pivoting or sliding support.

5. Rail vehicle (1) having a solar cell (2) according to one of claims 1 to 4, **characterised in that,** in its operating position, the at least one solar cell (2) is spaced away (9) from the outer skin (8) of the rail vehicle (1).

## Revendications

1. Véhicule ferroviaire (1) pourvu d'une cellule photovoltaïque (2), dans lequel au moins une cellule photovoltaïque (2) est prévue sur l'enveloppe extérieure (8) du véhicule ferroviaire (1), **caractérisé en ce que** l'au moins une cellule photovoltaïque (2) est disposée de manière à pouvoir glisser et peut être déplacée entre une position de fonctionnement et une position inactive, la surface de réception de lumière de l'au moins une cellule photovoltaïque (2) étant recouverte en position inactive.

2. Véhicule ferroviaire (1) pourvu d'une cellule photovoltaïque (2) selon la revendication 1, **caractérisé en ce que** la direction de glissement de l'au moins une cellule photovoltaïque (2) est orientée perpendiculairement à la direction longitudinale du véhicule ferroviaire (1).

3. Véhicule ferroviaire (1) pourvu d'une cellule photovoltaïque (2) selon la revendication 2, **caractérisé en ce que** l'au moins une cellule photovoltaïque (2) est recouverte par un capot (4) en position inactive.

4. Véhicule ferroviaire (1) pourvu d'une cellule photovoltaïque (2) selon l'une des revendications 1 à 3, **caractérisé en ce que** l'au moins une cellule photovoltaïque (2) est intégrée à un cadre de support (5) comprenant un roulement rotatif ou à glissement.

5. Véhicule ferroviaire (1) pourvu d'une cellule photovoltaïque (2) selon l'une des revendications 1 à 4, **caractérisé en ce que** l'au moins une cellule photovoltaïque (2) est espacée (9) de l'enveloppe extérieure (8) du véhicule ferroviaire (1) en position de fonctionnement.
